# EUROPÄISCHE PATENTANMELDUNG

(11) **EP 0 952 445 A2**
(43) Veröffentlichungstag der Anmeldung: **27.10.1999**
(21) Anmeldenummer: 99107773.6
(22) Anmeldetag: 20.04.1999
(51) Int. Cl.: G01N 27/02

(54) **Verfahren und Vorrichtung zur berührungslosen Erfassung von Objekten und/oder deren Materialeigenschaften**

(30) Priorität: 21.04.1998 DE 19817640
(71) Anmelder: Von der Emde, Gerhard, Dr., 53347 Alfter (DE)
(72) Erfinder: Von der Emde, Gerhard, Dr., 53347 Alfter (DE)
(74) Vertreter: WALTHER, WALTHER & HINZ Patentanwälte

(57) **Zusammenfassung**

Gegenstand der Erfindung ist ein Verfahren zur berührungslosen Erfassung von Objekten und/oder deren Materialeigenschaften mit den folgenden Schritten:
- A.: Aufbauen eines elektrischen Wechselstromfeldes zwischen einem Sender und einem Empfänger;
- B.: Vermessen des elektrischen Wechselsstromfeldes durch einen Detektor;
- C.: Auswerten der erfassten Messwerte durch ein Auswertungsverfahren mit den folgenden Schritten:
- C.1.1.: Ermitteln des Verlaufes einer Signalwelle aus den erfassten Messwerten;
- C.1.2.: Vergleichen des zeitlichen Verlaufes der ermittelten Signalwelle mit dem zeitlichen Verlauf eines Referenzsignals; und/oder
- C.2.1: Ermitteln einer maximalen Amplitude aus den erfassten Messwerten;
- C.2.2.: Vergleichen der ermittelten maximalen Amplitude mit der maximalen Amplitude des Referenzsignals; und/oder
- C.3.1.: Ermitteln der Phase aus den erfassten Messwerten;
- C.3.2.: Vergleichen der ermittelten Phase mit der Phase des Referenzsignals;
- D.: Auswerten des Vergleichs;
und eine Vorrichtung zur Durchführung dieses Verfahrens.

## Beschreibung

Die vorliegende Erfindung betrifft ein Verfahren und eine Vorrichtung zur berührungslosen Erfassung von Objekten und/oder deren Materialeigenschaften.

Das berührungsfreie Erfassen von Objekten, vorzugsweise im Wasser, geschieht oft nach elektromagnetischen oder akustischen Prinzipien, wobei man zwischen aktiven und passiven Vorrichtungen unterscheidet. Bei passiven Vorrichtungen wird ein Signal von dem zu messenden Objekt selbst emittiert und von Detektoren perzipiert. Bei aktiven Vorrichtungen senden diese selbst ein Signal aus, das von dem zu messenden Objekt reflektiert wird und auf die Vorrichtung zurückstrahlt und nunmehr vom Detektor perzipiert werden kann. Dieses Signal kann ein akustisches, optisches oder anderes elektromagnetisches Signal sein.

Objekte mit kapazitiven Eigenschaften, beispielsweise belebte oder ehemals belebte Lebewesen oder Pflanzen, können mit den bisher verwendeten Vorrichtungen nur in Ausnahmefällen als solche zweifelsfrei erkannt werden, nämlich dann, wenn ganz spezifische zusätzliche Eigenschaften vorliegen. Dies könnte z.B. dann der Fall sein, wenn dieses lebende Objekt selbst Wärme produziert, die dann in Form von Infrarotstrahlung detektiert werden kann. Dies hat den Nachteil, dass nur solche Objekte erkannt werden können, die deutlich wärmer als die Umgebung sind.

Aktiv arbeitende Vorrichtungen, wie beispielsweise Radar, Infrarot oder Ultraschall, werden in bestimmten Umgebungen leicht gestört bzw. stark abgeschwächt, insbesondere dann, wenn in der Luft oder in Flüssigkeiten Hindernisse oder Schwebeteilchen vorhanden sind.

Davon ausgehend liegt der vorliegenden Erfindung die Aufgabe zugrunde, ein Verfahren und eine Vorrichtung zur berührungslosen Erfassung von Objekten und/oder deren Materialeigenschaften zu schaffen, mit der die Objekte und/oder deren Materialeigenschaften auch unter schwierigsten Umweltbedingungen zweifelsfrei erkannt werden.

Davon ausgehend liegt der vorliegenden Erfindung die Erkenntnis zugrunde, dass bei Kenntnis der kapazitiven und/oder resistiven Eigenschaften eines Objektes zuverlässige Rückschlüsse auf deren Materialeigenschaften möglich sind.

Desweiteren liegt der vorliegenden Erfindung die Erkenntnis zugrunde, dass in einem elektrischen Wechselstromfeld Objekte mit überwiegend kapazitiven Eigenschaften den Verlauf und/oder die Phase eines Sinussignals verändern, während Objekte mit überwiegend resistiven Eigenschaften die Amplitude des Sinussignals verändern.

Als technische Lösung dieser Aufgabe wird erfindungsgemäß ein Verfahren mit den folgenden Schritten vorgeschlagen:
- A.: Aufbauen eines elektrischen Wechselstromfeldes zwischen einem Sender und einem Empfänger;
- B.: Vermessen des elektrischen Wechselstromfeldes durch einen Detektor;
- C.: Auswerten der erfassten Messwerte durch ein Auswertungsverfahren mit den folgenden Schritten:
- C.1.1.: Ermitteln des Verlaufes einer Signalwelle aus den erfassten Messwerten;
- C.1.2.: Vergleichen des zeitlichen Verlaufes der ermittelten Signalwelle mit dem zeitlichen Verlauf eines Referenzsignals; und/oder
- C.2.1.: Ermitteln einer maximalen Amplitude aus den erfassten Messwerten;
- C.2.2.: Vergleichen der ermittelten maximalen Amplitude mit der maximalen Amplitude des Referenzsignals; und/oder
- C.3.1.: Ermitteln der Phase aus den erfassten Messwerten;
- C.3.2.: Vergleichen der ermittelten Phase mit der Phase des Referenzsignals;
- D.: Auswerten des Vergleichs.

Ein nach dieser technischen Lehre ausgebildetes Verfahren hat den Vorteil, dass das Vermessen des elektrischen Wechselstromfeldes einfach und kostengünstig bewerkstelligt werden kann, und dass diese Daten in einfacher Weise ausgewertet werden können. Dabei lässt eine Veränderung des zeitlichen Verlaufes bzw. eine Veränderung der Phase der Signalwelle auf kapazitive Eigenschaften des Objektes schließen und eine Veränderung der Amplitude läßt auf resistive Eigenschaften des Objektes schließen. D.h., ein Objekt mit kapazitiven Eigenschaften ist beispielsweise ein belebtes oder ehemals belebtes Objekt, während ein Objekt mit resistiven Eigenschaften beispielsweise ein metallisches Objekt ist.

Ein weiterer Vorteil besteht darin, dass aufgrund von Abweichungen des erfassten Signals von dem Referenzsignal auf Veränderungen des Materials geschlossen werden kann. Beispielsweise hat ein metallisches Objekt in einem einwandfreien Zustand einen bestimmten ohmschen Widerstand, während dasselbe metallische Objekt einen anderen ohmschen Widerstand aufweist, wenn es einen Haarriss, einen Lunker oder andere Materialbeeinträchtigungen aufweist. Auch können hieraus Materialverunreinigungen ermittelt werden, da diese Verunreinigungen Änderungen des ohmschen Widerstandes oder der kapazitiven Eigenschaften hervorrufen.

Noch ein weiterer Vorteil besteht darin, dass bei einem Vergleich der erfassten kapazitiven und/oder resistiven Eigenschaften durch Abgleich dieser Messwerte mit einer Datenbank Rückschlüsse auf das betreffende Material gezogen werden können.

In einer bevorzugten Ausführungsform wird als Referenzsignal das ausgesendete Sinussignal oder ein in Abwesenheit des Objektes erfasstes Signal eingesetzt.

Das Speichern des ausgesendeten Signals als Referenzsignal hat den Vorteil, dass dies kostengünstig und schnell möglich ist, während das Vermessen des elektrischen Wechselstromfeldes in Abwesenheit eines Objektes zu einem sehr viel präziseren Referenzsignal führt, da hierbei die lokalen Gegebenheiten berücksichtigt werden können. Bei einem Einsatz dieses Verfahrens im Wasser, bzw. in einem fließenden Gewässer, können hierdurch eventuelle Strömungen, im Wasser befindliche Schwebeteilchen oder andere in der Nähe befindliche Objekte erfasst werden, so dass bei einem späteren Vermessen des eigentlichen Objektes nur die durch das eigentliche Objekt erzeugten Änderungen des Wechselstromfeldes gemessen werden, was zu sehr viel präziseren Ergebnissen führt.

In einer anderen, bevorzugten Ausführungsform wird das Vermessen des Wechselstromfeldes in Abwesenheit eines Objektes und das Speichern dieser Daten als Referenzsignal auch zu späteren Zeitpunkten durchgeführt, so dass hierdurch eventuell sich verändernde Umweltbedingungen erfasst werden, wodurch auch die späteren Messungen des eigentlichen Objektes auf sehr viel präzisere Weise ausgewertet werden können.

In einer anderen, bevorzugten Ausführungsform wird ein Referenzobjekt in das Wechselstromfeld gebracht und dieses vermessen. Die hierdurch erhaltenen Messwerte werden dann als Referenzsignal gespeichert.

Dies hat den Vorteil, dass hiermit beispielsweise in Serie gefertigte Objekte auf Materialfehler untersucht werden können, indem die aus dem eigentlichen, zu untersuchenden Objekt erhaltenen Messwerte mit den Messwerten des Referenzobjektes verglichen werden, wobei Haarrisse, Lunker, Materialverunreinigungen oder andere Materialfehler zuverlässig erkannt werden können, da diese die kapazitiven und/oder resistiven Eigenschaften des Materials verändern.

Zur präzisen und zuverlässigen Erfassung der zuvor genannten Materialfehler ist es vorteilhaft, sowohl das Referenzobjekt als auch das zu messende Objekt in einem definierten, vorzugsweise gleichen Abstand vom Sender und Empfänger anzuordnen. Hierdurch werden eventuelle Umwelteinflüsse minimiert.

In bevorzugten Ausführungsformen hat es sich als vorteilhaft erwiesen, das elektrische Wechselstromfeld durch ein gepulstes Sinussignal mit einer Frequenz von 1 kHz bis 10 kHz zu erzeugen. Dabei ist es bei der Detektion von kleineren Kapazitäten vorteilhaft, höherfrequente Signale einzusetzen und umgekehrt. Zur Vermessung von belebten Objekten hat sich eine Frequenz von 3 kHz als vorteilhaft erwiesen.

In einer bevorzugten Weiterbildung wird das Sinussignal einperiodisch ausgebildet und mit einer Frequenz zwischen 1 Hz und 30 Hz, vorzugsweise 10 Hz, ausgesendet. Das Aussenden einperiodischer Sinussignale hat den Vorteil, dass hierdurch eventuelle Überlagerungen verschiedener Signale ausgeschlossen werden können und dass ein eventuelles Nachschwingen des Sinussignals gemessen werden kann.

In einer anderen, vorteilhaften Weiterbildung wird das elektrische Feld durch Messen des Spannungsabfalles, insbesondere über einem Widerstand und/oder durch Messen des Stromflusses und/oder durch Messen der Stromflussdichte vermessen. All diese Messmethoden sind zuverlässig und kostengünstig realisierbar.

In einer anderen, bevorzugten Ausführungsform erfasst der Detektor die Messwerte zu definierten Zeitpunkten t₁, t₂ usw., die signifikante Punkte der Signalwelle darstellen, z. B. Nulldurchgänge, Amplituden oder Punkte mit maximalen Steigungen. Hierdurch kann die Zahl der zu erfassenden Messwerte reduziert werden, da in einigen Anwendungsfällen lediglich Informationen über die Amplitude erforderlich sind, da zur Ermittlung der Phasenverschiebung lediglich Informationen über den jeweiligen Nulldurchgang des Sinussignals erforderlich sind und da aus wenigen signifikanten Messwerten der Verlauf der Signalwelle ermittelt werden kann.

In einer besonders bevorzugten Ausführungsform wird das elektrische Wechselstromfeld in einem leitenden Medium aufgebaut. Dabei hat es sich als sehr vorteilhaft erwiesen, dieses elektrische Wechselstromfeld in Wasser oder in einem ionisierten Gas aufzubauen. Dieses Wasser sollte vorteilhafterweise kein destilliertes Wasser sein, sondern vielmehr ein mit Natrium, Chlor oder dgl. versetztes Wasser. Ein derartig mit Natrium versetztes Wasser (Seewasser) oder mit Chlor versetztes Wasser (Leitungswasser) leitet das elektrische Wechselstromfeld in günstiger Wise, so dass hiermit sehr präzise Messergebnisse erzielt werden können.

Als weitere technische Lösung dieser Aufgabe wird erfindungsgemäß eine Vorrichtung vorgeschlagen, welche eine ein elektrisches Wechselstromfeld aufbauende, einen Sender und einen Empfänger aufweisende Stromquelle, einen Detektor zum Vermessen des elektrischen Feldes, und eine Auswertungseinheit aufweist, wobei der Detektor derart an der Vorrichtung angebracht ist, dass er das eigene, elektrische Wechselstromfeld erfasst.

Eine nach dieser technischen Lehre ausgebildete Vorrichtung hat den Vorteil, dass durch das Vermessen des eigenen Wechselstromfeldes ein aktives Arbeitsprinzip geschaffen ist, das keine Abhängigkeit von fremden Vorrichtungen aufweist. Somit werden durch dieses Messprinzip Fehler und Ungenauigkeiten fremder Vorrichtungen von vornherein ausgeschaltet. Ein weiterer Vorteil besteht darin, dass durch das Vermessen des eigenen Wechselstromfeldes der Sender und der Detektor vergleichsweise nah beieinander angeordnet sein können, wodurch weitere umweltbedingte Einflüsse und Störungen ausgeschaltet werden.

Noch ein weiterer Vorteil besteht darin, dass eine solche Vorrichtung kostengünstig und sehr klein ausgeführt werden kann, da das elektrische Wechselstromfeld aufgrund der geringen zu überbrückenden Distanzen vergleichsweise schwach und klein ausgebildet sein kann.

Ein weiterer Vorteil des Aussendens und Vermessens des elektrischen Feldes in einer solchen Vorrichtung besteht darin, dass hierdurch ein Kalibrieren der Vorrichtung sowohl vor als auch während des Einsatzes möglich ist, wodurch Störeinflüsse zuverlässig ausgefiltert werden.

In einer bevorzugten Ausführungsform ist der Detektor mit der Stromquelle elektrisch verbunden, so dass der Detektor gleichzeitig auch als Empfänger des Wechselstromfeldes fungiert. Hierdurch wird ein zusätzlicher Empfänger überflüssig, was zu einer präziseren Vermessung des Wechselstromfeldes und zu einer kostengünstigeren Herstellung der Vorrichtung führt.

In einer anderen, bevorzugten Ausführungsform umfasst der Detektor einen Widerstand und eine Vorrichtung zum Messen des Spannungsabfalles. Dies hat den Vorteil, dass hierdurch in kostengünstiger Weise ein zuverlässiger Detektor geschaffen werden kann.

In einer anderen, bevorzugten Ausführungsform ist das elektrische Wechselstromfeld derart ausgerichtet, dass dessen Feldlinien möglichst senkrecht auf den Detektor auftreffen, wodurch eine hohe Messgenauigkeit und eine geringe Störanfälligkeit erreicht werden.

In noch einer bevorzugten Ausführungsform sind Sender und Detektor so angeordnet, dass das Objekt zwischen beiden hindurchgelangen kann. Hierdurch wird das Objekt präzise in die Mitte des Wechselstromfeldes gebracht, wo das Signal am stärksten ist und wo die Feldlinien annähernd parallel verlaufen, so dass hierdurch sehr präzise Messungen möglich sind. Weitere Vorteile des erfindungsgemäßen Verfahrens und der erfindungsgemäßen Vorrichtung ergeben sich aus der beigefügten Zeichnung und den nachfolgend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine schematische Darstellung einer erfindungsgemäßen Vorrichtung;
- Fig. 2.a.: den Verlauf eines Referenzsignals über die Zeit;

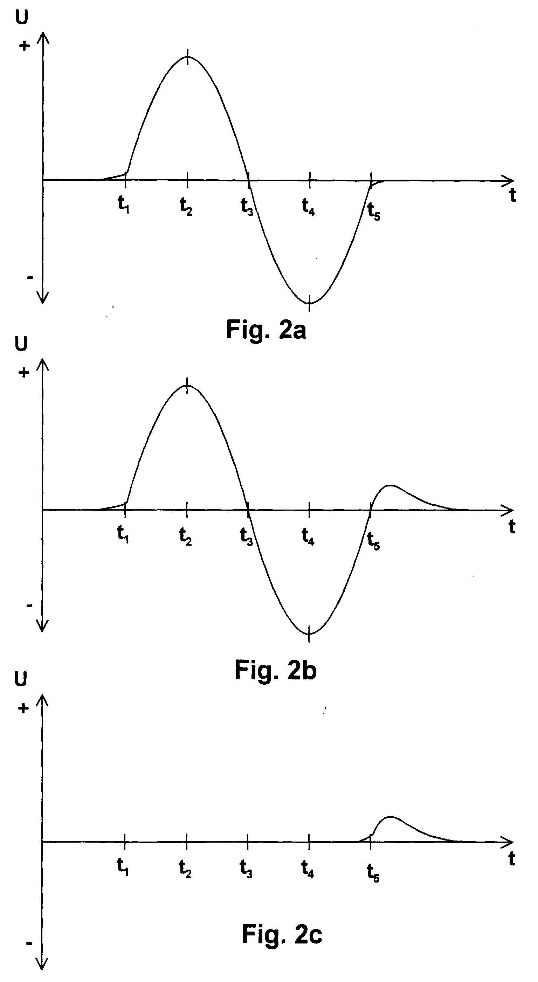

- Fig. 2.b.: den Verlauf einer ermittelten Signalwelle;
- Fig. 2.c.: die Abweichung zwischen der ermittelten Signalwelle gemäß Fig. 2.b. zum Referenzsignal gemäß Fig. 2.a.;

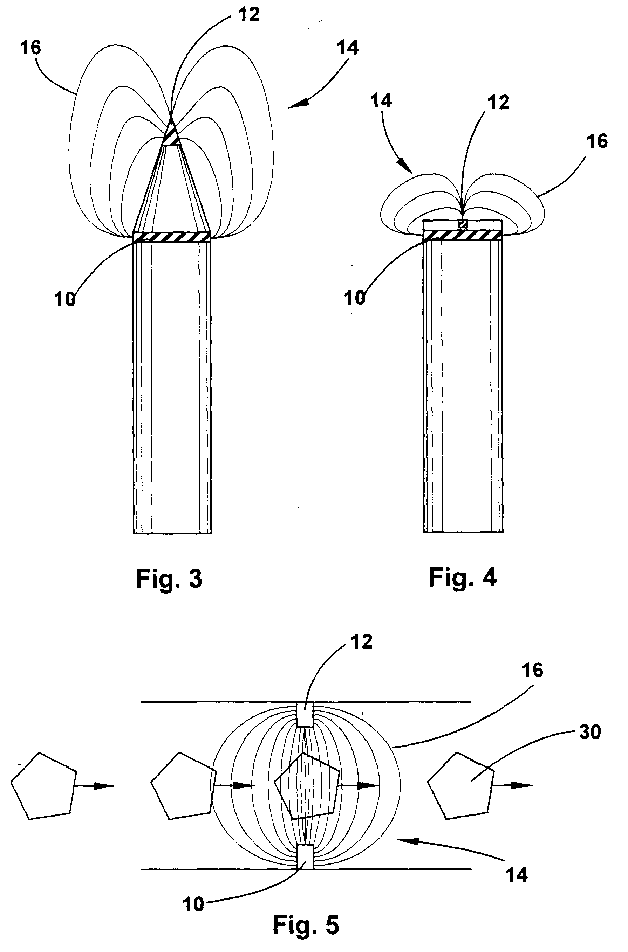

- Fig. 3: eine Seitenansicht einer ersten Ausführungsform einer erfindungsgemäßen Vorrichtung;
- Fig. 4: eine Seitenansicht einer zweiten Ausführungsform eines erfindungsgemäßen Vorrichtung;
- Fig. 5: eine Draufsicht einer dritten Ausführungsform eines erfindungsgemäßen Vorrichtung;

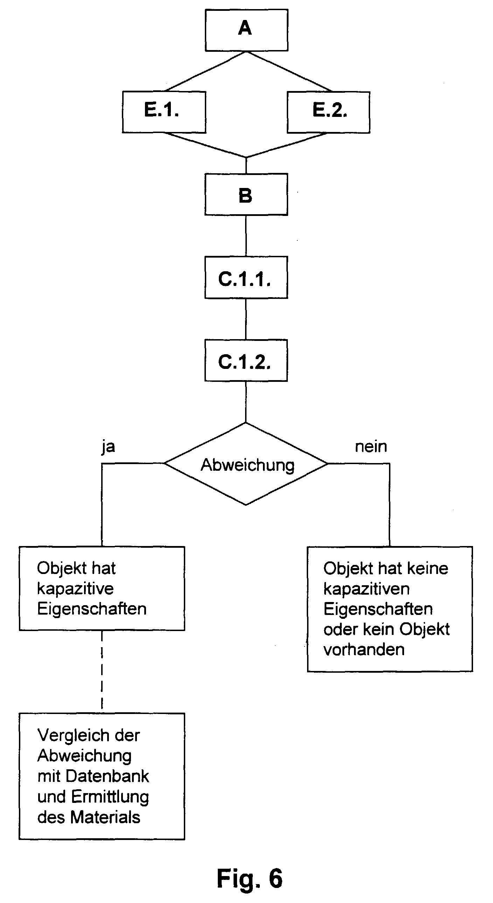

- Fig. 6: ein Flussdiagramm eines ersten Verfahrens zur berührungslosen Erfassung von Objekten;

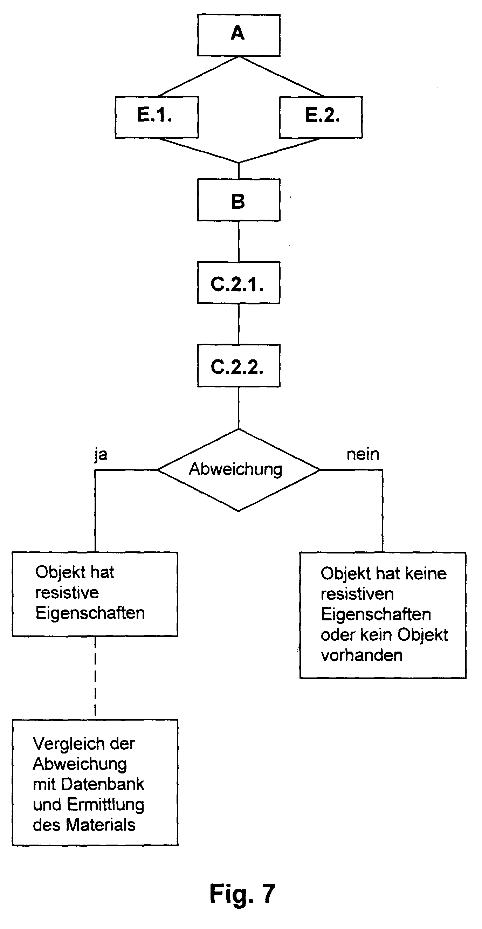

- Fig. 7: ein Flussdiagramm eines zweiten Verfahrens zur berührungslosen Erfassung von Objekten;

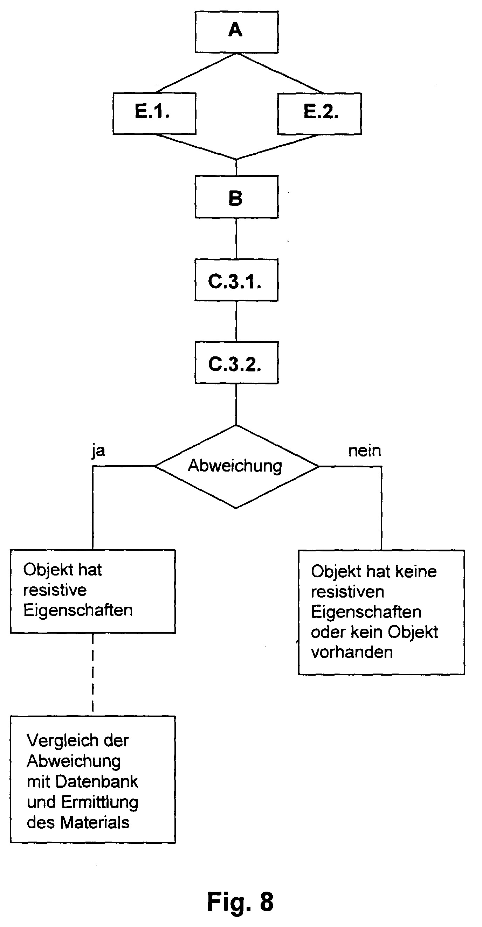

- Fig. 8: ein Flussdiagramm eines dritten Verfahrens zur berührungslosen Erfassung von Objekten;

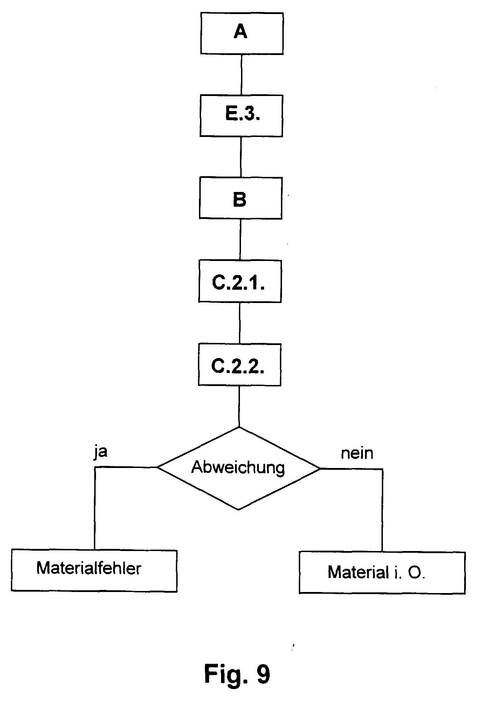

- Fig. 9: ein Flussdiagramm eines vierten Verfahrens zur berührungslosen Erfassung von Objekten.

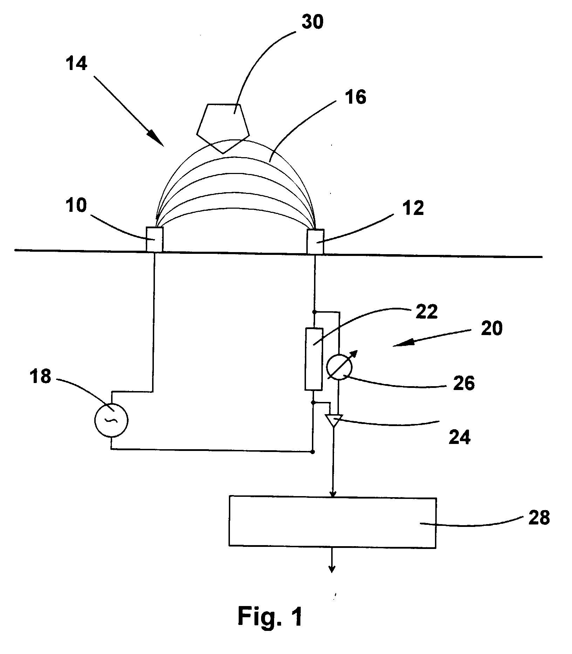

In Figur 1 ist eine erfindungsgemäße Vorrichtung zur berührungslosen Erfassung von Objekten und/oder deren Materialeigenschaften schematisch dargestellt. Diese Vorrichtung umfasst einen Sender 10 und einen Empfänger 12, zwischen denen ein elektrisches Wechselstromfeld 14 aufgebaut wird, welches hier durch seine Feldlinien 16 angedeutet ist. Sowohl der Sender 10 als auch der Empfänger 12 sind mit einer Stromquelle 18 verbunden, wobei zwischen dem Empfänger 12 und der Stromquelle 18 ein Detektor 20 angeordnet ist. Dieser Detektor 20 umfasst einen Widerstand 22, ein Logikelement 24 (Trigger) und einen Spannungsmesser 26. Dem Logikelement 24 nachgeschaltet ist eine EDV-gestützte Auswertungseinheit 28, die die hier gefundenen Informationen an eine entsprechende, hier nicht dargestellte Datenausgabe weitergibt. In dieser Ausführungsform sind Sender 10 und Empfänger 12 so angeordnet, dass ein Objekt 30 zwischen ihnen hindurchgeführt werden kann.

In den Figuren 3 und 4 ist eine stabförmige Vorrichtung zur berührungslosen Erfassung von Objekten dargestellt, wobei die in Figur 3 dargestellte Ausführungsform eine kegelförmige Spitze aufweist und wobei die in Figur 4 dargestellte Ausführungsform eine flache Spitze aufweist. Im Inneren dieser stabförmigen Vorrichtung sind dann die einzelnen elektronischen Bauteile angebracht, während die Auswertungseinheit extern angeordnet ist.

In Figur 5 ist eine andere Ausführungsform der erfindungsgemäßen Vorrichtung abgebildet, bei der der Sender 10 und der Empfänger 12 derart auseinander angeordnet sind, dass die Objekte 30 zwischen beiden hindurchbewegt werden können. Eine derartige Anordnung ist beispielsweise bei Fließbändern oder dergleichen vorteilhaft.

In den Figuren 6 bis 9 sind verschiedene Flussdiagramme dargestellt, die die verschiedenen Mess- und Auswertungsverfahren beschreiben. Es versteht sich, dass in speziellen Anwendungsfällen auch Kombinationen dieser hier beschriebenen Auswertungsverfahren möglich sind.

Das Verfahren zur berührungslosen Erfassung von Objekten und/oder deren Materialeigenschaften umfasst die folgenden Schritte:
- A:: Aufbauen eines elektrischen Wechselstromfeldes zwischen einem Sender 10 und einem Empfänger 12 durch Aussenden eines gepulsten, einperiodischen Sinussignals mit einer Frequenz von vorzugsweise 3 kHz. Zu späteren Zeitpunkten kann dieses einperiodische Sinussignal wiederholt werden, wobei sich hierbei eine Frequenz von 10 Hz als vorteilhaft erwiesen hat. Durch dieses einperiodische Sinussignal kann auch ein eventuelles Nachschwingen erfasst und ausgewertet werden.
- E.1:: Das vom Sender 10 ausgesendete Sinussignal wird als Referenzsignal gespeichert, wobei neben der Amplitude und der Phase auch der Verlauf des Sinussignals über die Zeit gespeichert wird.
- E.2:: In Abwesenheit eines Objektes wird das elektrische Wechselstromfeld vermessen, wobei die hierbei erfassten Messwerte als Referenzsignal gespeichert werden.
- B:: Vermessen des elektrischen Wechselstromfeldes durch einen Detektor, wobei der Spannungsabfall über einem Widerstand gemessen wird. Dabei wird das einperiodi-sche Sinussignal zu mehreren Zeitpunkten t₁, t₂ usw. vermessen, wobei jeder Messpunkt t₁, t₂ usw. einen markanten Eckpunkt des Sinussignals darstellt, beispielsweise einen Nulldurchgang, eine Amplitude usw. Einzelheiten hierzu können den Figuren 2 a) bis 2 c) entnommen werden.
- C:: Die Auswertung der erfassten Messwerte erfolgt in Abhängigkeit von den zu untersuchenden Eigenschaften. Beispielsweise haben lebende oder ehemals lebende Objekte überwiegend kapazitive Eigenschaften, die durch eine Abweichung des Verlaufes der Signalwelle über die Zeit oder eine Abweichung der Phase festgestellt werden können. Eine solche Erfassungsmethode findet beispiels-weise dann Anwendung, wenn Informationen über das Vorhandensein von Lebewesen in der Nähe der Messvorrichtungen gewünscht werden.
Zum Beispiel metallische Objekte haben überwiegend resistive Eigenschaften, die über eine Änderung der Amplitude erfasst werden können. Zur Erfassung der Anwesenheit eines metallischen Objektes sollten also die resistiven Eigenschaften detektiert werden.
Auch eine Kombination der Detektion von kapazitiven und resistiven Eigenschaften ist möglich, indem man die beiden Messmethoden miteinander kombiniert. Hierzu muss lediglich die Auswertungseinheit mit einer entsprechenden logischen Abfrage ausgestattet werden.
- C.1.1:: Aus den erfassten Messwerten wird beispielsweise durch Interpolation der Verlauf einer Signalwelle ermittelt.
- C.1.2:: Dieser ermittelte Verlauf der Signalwelle wird verglichen mit dem Referenzsignal, wobei Abweichungen auf die An-wesenheit eines Objektes mit kapazitiven Eigenschaften schließen lassen. Sofern über verschiedene Objekte Informationen über die Art und den Umfang der Abweichung vorliegen, können auch weitergehende Rückschlüsse auf die Art des Materials und ggf. auf die Größe des Objektes gezogen werden.
- C.2.1:: Aus den zu den verschiedenen Zeitpunkten t₁, t₂ usw. ermittelten Messwerten werden die Messwerte der jeweiligen Amplitude herausgefiltert, beispielsweise die Messwerte zu den Zeitpunkten t₂, und t₄.
- C.2.2:: Die ermittelten maximalen Amplituden werden verglichen mit den jeweiligen maximalen Amplituden des Referenzsignals, wobei eine Abweichung der Amplitude auf ein Objekt mit resistiven Eigenschaften schließen lässt. Sofern Vergleichswerte für die Abweichung vorliegen, können auch hier Rückschlüsse auf die Art des Materials gezogen werden. Hierbei ist es jedoch vorteilhaft, den Abstand zwischen dem Objekt und dem Empfänger in die Auswertung miteinzubeziehen, da die Abweichung der Amplitude auch ein Maß für den Abstand des Objektes zum Empfänger darstellt.
- C.3.1:: Ermitteln der Phase der erfassten Signalwelle aus den Messwerten, insbesondere Ermittlung der Nulldurchgänge der erfassten Signalwelle.
- C.3.2:: Vergleichen dieser Phase, insbesondere der Nulldurch-gänge mit dem Referenzsignal, wobei eine Abweichung der Phase, insbesondere der Nulldurchgänge, auf die Anwesenheit eines Objektes mit kapazitiven Eigenschaf-ten schließen lässt. Auch hier kann über die Größe der Abweichung eine Information über die Art des Materials erhalten werden, sofern Vergleichswerte vorliegen.

Es versteht sich, dass auch Kombinationen dieser Auswertungsverfahren möglich sind, da es auch Objekte mit sowohl kapazitiven als auch resistiven Eigenschaften gibt.

Mit den in den Figuren 6 bis 8 dargestellten Verfahren lässt sich auf die Anwesenheit eines Objektes und ggf. auf die Art des Materials eines Objektes schließen. In dem nachfolgend in Figur 9 beschriebenem Verfahren können Materialfehler erkannt werden.
- E.3:: In das elektrische Wechselstromfeld wird ein Referenzobjekt gebracht und anschließend wird das elektrische Wechselstromfeld vermessen. Die hierbei erfassten Messwerte werden als Referenzsignal gespeichert.
- C:: Die Auswertung erfolgt hier beispielsweise über die erfasste Amplitude (wie C.2.1 und C.2.2), allerdings ist auch eine Auswertung über die Phasenverschiebung (C.3.1 und C.3.2) möglich. Über das einmal vermessene Referenzobjekt liegen also Informationen über die resistiven Eigenschaften des Referenzobjektes vor. Diese Daten bilden den sogenannten Idealfall. Nachfolgend werden dann die zu untersuchenden Objekte vermessen. Tritt nun eine Abweichung der Amplitude bei den nachfolgenden Objekten auf, so liegt die Ursache hierfür sicherlich in einem Materialfehler, wie beispielsweise einem Haarriss, einem Lunker oder einer Materialverunreinigung.

Für alle Messverfahren ist es vorteilhaft, das elektrische Wechselstromfeld in einer leitenden Umgebung, beispielsweise in chlorhaltigem Wasser, in salzhaltigem Wasser oder dgl. aufzubauen, da hierdurch eine vorteilhafte Weiterleitung des elektrischen Feldes gewährleistet ist.

Das hier beschriebene Verfahren hat darüberhinaus den Vorteil, dass sowohl die Anwesenheit eines Objektes, als auch dessen Materialqualität unabhängig von der Form und der Größe des Objektes bestimmt werden können.

### Bezugszeichenliste:

- 10: Sender
- 12: Empfänger
- 14: Wechselstromfeld
- 16: Feldlinien
- 18: Stromquelle
- 20: Detektor
- 22: Widerstand
- 24: Logikelement
- 26: Spannungsmesser
- 28: Auswertungseinheit
- 30: Objekt

## Patentansprüche

1. Verfahren zur berührungslosen Erfassung von Objekten und/oder deren Materialeigenschaften mit den folgenden Schritten:
A. Aufbauen eines elektrischen Wechselstromfeldes zwischen einem Sender und einem Empfänger;
B. Vermessen des elektrischen Wechselstromfeldes durch einen Detektor;
C. Auswerten der erfassten Messwerte durch ein Auswertungverfahren mit den folgenden Schritten:
C.1.1. Ermitteln des Verlaufs einer Signalwelle aus den erfassten Messwerten;
C.1.2. Vergleichen des zeitlichen Verlaufs der ermittelten Signalwelle mit dem zeitlichen Verlauf eines Referenzsignals; und/oder
C.2.1. Ermitteln einer maximalen Amplitude aus den erfassten Messwerten;
C.2.2. Vergleichen der ermittelten maximalen Amplitude mit der maximalen Amplitude des Referenzsignals; und/oder
C.3.1. Ermitteln der Phase aus den erfassten Messwerten;
C.3.2. Vergleichen der ermittelten Phase mit der Phase des Referenzsignals;
D. Auswerten des Vergleichs.

2. Verfahren nach Anspruch 1,
**dadurch gekennzeichnet**,
dass die Auswertung in Schritt D. dahingehend erfolgt, dass
- bei einer Abweichung des Verlaufs der Signalwelle und/oder bei einer Abweichung der Phase der erfassten Messwerte vom Referenzsignal ein Objekt mit kapazitiven Eigenschaften vorhanden ist, und dass
- bei einer Abweichung der maximalen Amplitude der erfassten Messwerte vom Referenzsignal ein Objekt mit resistiven Eigenschaften vorliegt.

3. Verfahren nach wenigstens einem der vorangehenden Ansprüche, **dadurch gekennzeichnet**,
dass die Art und der Umfang der Abweichung mit Referenzdaten verglichen wird, aus denen das Material ermittelbar ist.

4. Verfahren nach wenigstens einem der vorangehenden Ansprüche, **gekennzeichnet durch** folgenden, zusätzlichen Schritt:
E.1. Speichern des ausgesendeten Signals als Referenzsignal

5. Verfahren nach wenigstens einem der Ansprüche 1 bis 3, **gekennzeichnet durch** folgenden, zusätzlichen Schritt:
E.2. Speichern der in Abwesenheit eines Objektes erfassten Messwerte als Referenzsignal.

6. Verfahren nach Anspruch 5,
**gekennzeichnet durch** folgenden, zusätzlichen Schritt:
F. Wiederholen des Schrittes E.2. nach einer späteren Objektmessung.

7. Verfahren nach wenigstens einem der vorangehenden Ansprüche, **gekennzeichnet durch** folgenden, zusätzlichen Schritt:
E.3. Vermessen des elektrischen Wechselstromfeldes in Anwesenheit eines Referenzobjektes und Speichern der erfassten Messwerte als Referenzsignal.

8. Verfahren nach Anspruch 7,
**dadurch gekennzeichnet**,
dass das Referenzobjekt in Schritt E.3. einen definierten Abstand zum Sender und/oder zum Emfpänger aufweist.

9. Verfahren nach Anspruch 8,
**dadurch gekennzeichnet**,
dass das Objekt in Schritt B. denselben, definierten Abstand zum Sender und/oder zum Emfpänger aufweist wie das Referenzobjekt.

10. Verfahren nach wenigstens einem der vorangehenden Ansprüche, **dadurch gekennzeichnet**,
dass das elektrische Wechselstromfeld ein durch ein gepulstes Sinussignal mit einer Frequenz von 1 bis 10 kHz, vorzugsweise 3 kHz, erzeugtes Wechselstromfeld ist.

11. Verfahren nach Anspruch 10,
**dadurch gekennzeichnet**,
dass das Sinussignal einperiodisch ausgebildet ist und mit einer Frequenz zwischen 1 Hz und 30 Hz, vorzugsweise 10 Hz ausgesendet wird.

12. Verfahren nach wenigstens einem der vorangehenden Ansprüche, **dadurch gekennzeichnet**,
dass in Schritt B. das Vermessen des elektrischen Feldes durch Messen des Spannungsabfalles, insbesondere über einen Widerstand, durch Messen des Stromflusses und/oder durch Messen der Stromflussdichte erfolgt.

13. Verfahren nach wenigstens einem der vorangehenden Ansprüche, **dadurch gekennzeichnet**,
dass der Detektor die Messwerte zu definierten Zeitpunkten t₁, t₂, usw. erfasst, wobei sich die Zeitpunkte t₁, t₂, usw. in Relation zur Signalwelle definieren.

14. Verfahren nach wenigstens einem der vorangehenden Ansprüche, **dadurch gekennzeichnet**,
dass das elektrische Wechselstromfeld in einem leitenden Medium, vorzugsweise in Wasser oder in einem ionisierten Gas, aufgebaut wird.

15. Vorrichtung zur berührungslosen Erfassung von Objekten und/oder deren Materialeigenschaften, insbesondere unter Einsatz des Verfahrens nach einem der vorangehenden Ansprüche,
**gekennzeichnet durch**
eine ein elektrisches Wechselstromfeld aufbauende, einen Sender und einen Empfänger aufweisende Stromquelle, durch einen Detektor zum Vermessen des elektrischen Feldes, und durch eine Auswertungseinheit, wobei der Detektor derart an der Vorrichtung angebracht ist, dass er das eigene, elektrische Wechselstromfeld erfasst.

16. Vorrichtung nach Anspruch 15,
**dadurch gekennzeichnet**,
dass der Detektor gleichzeitig als Empfänger des elektrischen Wechselstromfeldes eingesetzt ist.

17. Vorrichtung nach wenigstens einem der Ansprüche 15 oder 16, **dadurch gekennzeichnet**,
dass der Detektor einen Widerstand und eine Vorrichtung zum Messen des Spannungsabfalles des elektrischen Feldes über dem Widerstand aufweist.

18. Vorrichtung nach wenigstens einem der Ansprüche 15 bis 17, **dadurch gekennzeichnet**,
dass der Detektor mit der Stromquelle elektrisch verbunden ist.

19. Vorrichtung nach wenigstens einem der Ansprüche 15 bis 18, **dadurch gekennzeichnet**,
dass der Detektor einen Widerstand und eine Vorrichtung zum Messen des Spannungsabfalles umfasst.

20. Vorrichtung nach wenigstens einem der Ansprüche 15 bis 19, **dadurch gekennzeichnet**,
dass das elektrische Wechselstromfeld ein durch ein gepulstes Sinussignal mit einer Frequenz von 1 Hz bis 10 kHz, vorzugsweise 3 kHz, erzeugtes Wechselstromfeld ist.

21. Vorrichtung nach Anspruch 20,
**dadurch gekennzeichnet**,
dass das Sinussignal einperiodisch ausgebildet ist und mit einer Frequenz zwischen 1 Hz und 30 Hz, vorzugsweise 10 Hz ausgesendet wird.

22. Vorrichtung nach wenigstens einem der Ansprüche 15 bis 21,
**dadurch gekennzeichnet**,
dass das elektrische Wechselstromfeld derart ausgerichtet ist, dass dessen Feldlinien möglichst senkrecht auf den Detektor auftreffen.

23. Vorrichtung nach wenigstens einem der Ansprüche 15 bis 21,
**dadurch gekennzeichnet**,
dass der Sender und der Detektor so angeordnet sind, dass das Objekt zwischen beiden hindurchgelangen kann.
